# EUROPÄISCHE PATENTSCHRIFT

(11) **EP 0 774 144 B1**
(45) Veröffentlichungstag und Bekanntmachung des Hinweises auf die Patenterteilung: **04.08.2004**
(21) Anmeldenummer: 96913696.9
(22) Anmeldetag: 30.05.1996
(51) Int. Cl.: G06K 19/07

(54) **CHIPKARTE**
CHIP-CARD
CARTE A PUCE

(30) Priorität: 02.06.1995 AT 94795
(43) Veröffentlichungstag der Anmeldung: 21.05.1997
(60) Teilanmeldung: 03102645.3
(73) Patentinhaber: Koninklijke Philips Electronics N.V., 5621 BA Eindhoven (NL); Mikron Gesellschaft für integrierte Mikroelektronik m.b.H., 8101 Gratkorn (AT)
(72) Erfinder: BERGER, Dominik, A-8045 Graz (AT); EBER, Wolfgang, A-8047 Graz (AT); HOLWEG, Gerald, A-8055 Graz (AT)
(74) Vertreter: Peters, Carl Heinrich, Dipl.-Ing.
(86) Internationale Anmeldenummer: PCT/IB1996/000518
(87) Internationale Veröffentlichungsnummer: WO 1996/038814

(56) Entgegenhaltungen:
- WO-A-93/09551
- DE-C- 3 935 364
- GB-A- 2 245 725
- PATENT ABSTRACTS OF JAPAN vol. 010, no. 341 (P-517), 18.November 1986 & JP,A,61 143890 (TOSHIBA CORP), 1.Juli 1986,

## Beschreibung

Die vorliegende Erfindung betrifft eine Chipkarte nach dem Oberbegriff des unabhängigen Anspruchs 1. Die vorliegende Erfindung betrifft ferner eine Chipkarte nach dem Oberbegriff des unabhängigen Anspruchs 2.

Aus der DE-C-39 35 364 ist eine Chipkarte bekannt, die sowohl über Kontakte als auch über zumindest eine Antennenspule mit einer zugehörigen Schreib-Lese-Station koppelbar ist, wobei die Schreib-Lese-Station über die Kopplung die Energie für den Betrieb der Chipkarte liefert und auch der Datenaustausch über diese Kopplung erfolgt und wobei für den Fall der Kopplung über die Antennenspule(n) ein Gleichrichter zur Energieversorgung vorgesehen ist.

Chipkarten sind hoch integrierte elektronische Einheiten (Chips), verpackt in Kunststoff in Kreditkartenformat. Je nach Anwendungsbereich kennt man heute z.B. elektronische Fahrscheine, GSM-Karten, Telefonkarten und viele mehr. Die elektronischen Einheiten unterscheiden sich je nach Einsatzbereich vor allem in den Parametern Speicherkapazität, Zugriffsschutz, Datenübertragungsrate, Flexibilität und Übertragungsabstand für kontaktlose Chipkarten.

In den meisten Fallen besitzen Chipkarten ein Kontaktfeld für den kontaktbehafteten Betrieb. In letzter Zeit werden aber bereits verstärkt kontaktlose Karten eingesetzt, die sich vor allem durch höhere Zuverlässigkeit, komfortablere Handhabung und Vandalensicherheit für die zugehörigen kontaktlosen Schreib-Lese-Stationen auszeichnen. Beim kontaktlosen Betrieb erfolgt Energie- und Taktübertragung zur Kartenelektronik bzw. bidirektionale Datenübertragung durch induktive Kopplung zwischen der Antenne der Schreib-Lese-Station und der Antennenspule der Chipkarte. Die Versorgungsspannung der Chipkarte wird durch Gleichrichten eines von der Schreib-Lese-Station ausgesendeten HF-Signals erzeugt. Beim kontaktbehafteten Betrieb werden Versorgungsspannung, Takt und Daten über getrennte Kontakte geführt.

Aus der DE-C-39 35 364 ist nun auch schon eine Chipkarte bekannt, die sowohl über Kontakte als auch über induktive Kopplung betrieben werden kann. Die Betriebsarten können wahlweise und völlig gleichberechtigt durch Verwendung entweder einer kontaktlosen oder einer kontaktbehafteten Schreib-Lese-Station aktiviert werden.

Zu diesem Zweck ist gemäß der DE-C-39 35 364 ein Multiplexer vorgesehen, an den einerseits die Signale der Kontakte eines Kontaktfeldes und andererseits die von den Spulen empfangenen und entsprechend aufbereiteten Signale (Versorgungsspannung, Takt, Daten) angeschlossen sind. An die Ausgänge des Multiplexers ist eine Schaltung, wie sie auch bei Chipkarten, die nur für kontaktbehafteten Betrieb ausgelegt sind, vorgesehen ist, angeschlossen (z.B. ein Rechenwerk und eine Speichereinheit). Um festzulegen, welche Signale vom Multiplexer an die Ausgänge durchgeschaltet werden, (die an den Kontakten des Kontaktfeldes anliegenden Signale oder die von den Spulen empfangenen und entsprechend aufbereiteten Signale), ist ein Komparator vorgesehen, der die Gleichspannung, die aus dem von den Spulen empfangenen HF-Signal gewonnen wird, mit der am Kontaktfeld anliegenden Gleichspannung vergleicht.

Bei dieser Schaltung ist nachteilig, daß auch die Betriebsspannung über den Multiplexer geführt wird, in dem zwangsläufig ein gewisser Spannungsabfall auftritt. Die Schaltung wird daher im Grenzbereich (bei großem Abstand zwischen Schreib-Lese-Station und Chipkarte) nur schlecht funktionieren.

Es ist Aufgabe der vorliegenden Erfindung, eine Chipkarte der eingangs genannten Art zu schaffen, bei der die Reichweite in kontaktlosem Betrieb genauso groß-oder nur unwesentlich geringer ist wie bei Chipkarten, die nur für kontaktlosen Betrieb geeignet sind.

Diese Aufgabe wird durch eine Chipkarte gemäß dem Oberbegriff des unabhängigen Anspruchs 1 gelöst durch die kennzeichnenden Merkmale des unabhängigen Anspruchs 1. Gemäß dieser Lösung ist der Gleichrichter direkt mit Komponenten, die Betriebsspannung benötigen, verbunden, und ist eine Wechselspannungserkennungsschaltung zum Umschalten der Chipkarte zwischen den beiden Betriebsarten "Kopplung über die Kontakte" und "Kopplung über die Antennenspule(n)" vorgesehen.

Es wird also die im Gleichrichter erzeugte Spannung direkt den Komponenten, die Betriebsspannung benötigen, zugeführt, so daß diese voll zur Verfügung steht, wie dies bei Chipkarten, die nur für kontaktlosen Betrieb geeignet sind, der Fall ist. Die Reichweite ist daher - vom etwas höheren Stromverbrauch abgesehen - etwa gleich groß wie die der Chipkarten, die nur für kontaktlosen Betrieb ausgelegt sind.

Aufgrund dieser Maßnahme ist aber eine Schaltung zur Umschaltung der Betriebsarten, wie sie in der DE-C-39 35 364 vorgesehen ist, nicht möglich: da nämlich der Gleichrichter direkt mit den Betriebsspannung benötigenden Komponenten verbunden ist, liegt an ihm immer Spannung an, egal, ob diese von ihm oder von einem Kontakt des Kontaktfeldes geliefert wird. (Bei der aus der DE-C-39 35 364 bekannten Schaltung ist dies nicht der Fall, weil die Versorgungsspannung über den Multiplexer den Betriebsspannung benötigenden Komponenten zugeführt wird.) Aus diesem Grund ist erfindungsgemäß eine Wechselspannungserkennungsschaltung (z.B. in Form eines zusätzlichen Gleichrichters) zum Umschalten zwischen den Betriebsarten vorgesehen. Wenn von dieser eine Wechselspannung an der Antennenspule detektiert wird, wird die Chipkarte auf die kontaktlose Betriebsart ("Kopplung über die Antennenspule(n)"), sonst auf die kontaktbehaftete Betriebsart ("Kopplung über die Kontakte") umgeschaltet.

Die gestellte Aufgabe wird ferner bei einer Chipkarte gemäß dem Oberbegriff des unabhängigen Anspruchs 2 gelöst durch die kennzeichnenden Merkmale des unabhängigen Anspruchs 2. Gemäß dieser Lösung ist es alternativ zur Wechselspannungserkennungsschaltung auch möglich, daß der die Versorgungsspannung liefernde Kontakt beispielsweise durch eine Diode vom Gleichrichter entkoppelt ist und daß an diesem Kontakt eine Spannungserkennungsschaltung zum Umschalten der Chipkarte zwischen den beiden Betriebsarten "Kopplung über die Kontakte" und "Kopplung über die Antennenspule(n)" angeschlossen ist. Wenn von dieser eine Spannung an dem Kontakt detektiert wird, wird die Chipkarte auf die kontaktbehaftete Betriebsart("Kopplung über die Kontakte"), sonst auf die kontaktlose Betriebsart ("Kopplung über die Antennenspule(n)") umgeschaltet.

In ersterem Fall ist also maßgebend für die Betriebsart, ob in der Antennenspule eine Wechselspannung induziert wird, in letzterem Fall, ob am entsprechenden Kontakt eine Gleichspannung anliegt. Auch eine Kombination der beiden Möglichkeiten ist denkbar.

Es ist zweckmäßig, wenn genau eine Antennenspule vorgesehen ist. Eine Chipkarte, die nur für kontaktlosen Betrieb ausgelegt ist und mit nur einer Antennenspule auskommt, ist in der AT-B-395 224 beschrieben. Verwendet man das dort beschriebene Übertragungssystem im Rahmen der vorliegenden Erfindung, so zeichnet sich die Schaltung durch die geringstmögliche Anzahl von elektronischen Komponenten, das sind nur eine Spule, ein Chip und ein Kontaktfeld, und durch eine integrationstechnisch einfach realisierbare Schnittstellenumschaltung aus.

Vorzugsweise sind die Speicherzugriffsrechte zum Zugriff auf einen von der Chipkarte umfaßten Datenspeicher abhängig von den Betriebsarten "Kopplung über die Kontakte" und "Kopplung über die Antennenspule(n)" unterschiedlich konfigurierbar. Insbesondere können zwei Speicherbereiche vorgesehen sein, die abhängig von den Betriebsarten "Kopplung über die Kontakte" und "Kopplung über die Antennenspule(n)" alternativ aktiviert sind. Auf diese Weise kann ein- und dieselbe Karte zwei völlig unterschiedliche Funktionen ausüben, je nachdem, in welcher Betriebsart sie eingesetzt wird. (z.B. elektronischer Fahrschein in kontaktlosem Betrieb und Telefonwertkarte in kontaktbehaftetem Betrieb.) Besonders günstig ist es, wenn in der Betriebsart "Kopplung über die Antennenspule(n)" zur Erzielung einer maximalen Übertragungsreichweite die für diese Betriebsart nicht benotigten Schaltungsteile in einen stromsparenden Ruhezustand versetzt sind. In diesem Fall ist die Reichweite genauso groß wie die einer Chipkarte, die nur für kontaktlosen Betrieb ausgelegt ist.

Wenn der Chip auf der Unterseite des Kontaktfeldes montiert ist und der Chip über zwei Anschlüsse mit einer gewickelten, geätzten oder gedruckten Antennenspule, die in der Chipkarte eingebettet ist, verbunden ist, so kann eine sehr große Antennenspule verwendet werden, was für eine große Reichweite günstig ist. Besonders einfach herstellbar ist eine Chipkarte jedoch, wenn die Antennenspule mit dem Chip mitintegriert ist. Auch in diesem Fall ist es zweckmäßig, wenn der Chip mit integrierter Antenne unter dem Kontaktfeld montiert ist. Ein Kompromiß zwischen einfacher Herstellbarkeit und Größe der Antennenspule besteht darin, daß der Chip auf der Unterseite des Kontaktfeldes montiert ist und daß der Chip über zwei Anschlüsse mit einer kleinen Antennenwicklung verbunden ist, die sich so wie der Chip ebenfalls unter dem Kontaktfeld innerhalb des Kontaktmodules befindet.

Nachfolgend wird die Erfindung anhand der beiliegenden Zeichnungen erläutert. Es zeigt: Fig. 1 eine schematische Darstellung der elektrischen Schaltung mit der geringstmöglichen Anzahl von Einzelkomponenten; Fig. 2 eine mögliche Verpackung dieser Schaltung in einer Plastikkarte; Fig. 3 das elektrische Blockschaltbild des monolithisch integrierbaren Schaltkreises (Chip); und Fig, 4 ein Blockschaltbild analog zu Fig. 3, jedoch von einer anderen Ausführungsform.

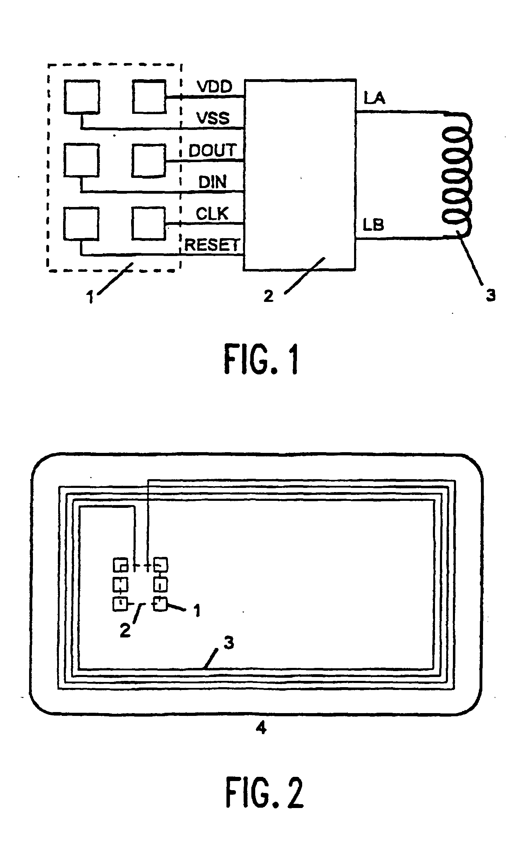

Wie aus Fig. 1 ersichtlich, besitzt ein monolithisch integrierter Schaltkreis bzw. Chip 2 Anschlüsse LA, LB für eine Antennenspule 3 und Anschlüsse VDD, VSS, DOUT, DIN, CLK, RESET für ein Kontaktfeld 1. (Zwischen VDD und VSS liegt die Versorgungsspannung; über DOUT werden-Daten zur Schreib-Lese-Station, über DIN zur Chipkarte übertragen; über CLK wird ein Taktsignal zur Chipkarte übertragen, über RESET ein Nullungssignal.) Wie aus Fig. 2 ersichtlich, ist der Chip 2, wie bei rein kontaktbehafteten Karten üblich, auf der Unterseite des Kontaktfeldes 1 montiert. Eine Antennenspule 3, bestehend aus einigen Windungen, ist in der Chipkarte 4 eingebettet, wahlweise gewickelt, geätzt oder gedruckt. Rein kontaktbehaftete Kartentechnologie kann daher in einfacher Weise bei Verwendung eines dafür geeigneten Chips auf kontaktlosen Betrieb erweitert werden, indem der unter dem Kontaktfeld 1 sitzende Chip 2 zusätzlich über zwei Anschlüsse mit einer in der Chipkarte 4 eingebetteten Antennenspule 3 verbunden wird.

Die in Fig. 2 dargestellte Realisierung ermöglicht die maximale Reichweite bei kontaktlosem Betrieb für ein vorgegebenes Kartenformat, da hier die Antennenspule 3 so plaziert ist, daß sich maximale Wicklungsfläche ergibt.

Es sind aber auch andere Antennenanordnungen im Rahmen der vorliegenden Erfindung möglich, sodaß z.B. mit ein und derselben Karte die internationalen Standards sowohl für kontaktbehaftete Karten (ISO 7816) als auch für kontaktlose Karten (ISO 10536) erfüllt werden. Auch die Kombinationsmöglichkeit mit Magnetstreifen bleibt vollständig erhalten.

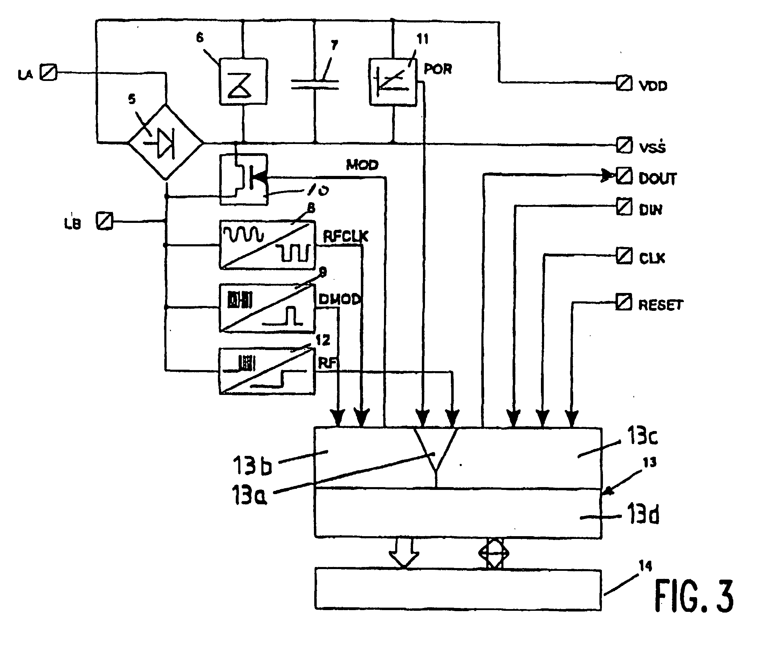

Anhand von Fig. 3 wird nun die Funktion des Chips 2 erläutert. Beim kontaktlosen Betrieb werden über LA und LB Energie, Takt und Daten empfangen bzw. Daten gesendet. Ein dafür verwendbares Übertragungsverfahren ist in der AT-B-39S 224 dokumentiert. Das empfangene HF-Signal wird in einem Gleichrichter 5 gleichgerichtet, von einem Kondensator 7 geglättet und von einem Parallelregler 6 (im einfachsten Fall einer Zenerdiode) in seiner Größe begrenzt. Aus der Wechselspannung wird weiters in einer Taktaufbereitungsschaltung 8 der Takt für die Chip-Schaltung abgeleitet. In einer Demodulationsstufe 9 werden die empfangenen Daten aufbereitet, und mit einer Modulationsstufe 10 werden Daten zurückgesendet. Mit einer Pegelerkennungsschaltung 11 wird die Überschreitung der minimal erforderlichen Betriebsspannung angezeigt. Zur Realisierung von kontaktloser und kontaktbehafteter Schnittstelle am gleichen Chip 2 ist eine automatische Erkennung des Betriebsfalles zur Aktivierung der korrekten Schnittstelle erforderlich. Dies wird mit einer Wechselspannungserkennungsschaltung 12 realisiert, die bei Vorliegen einer Wechselspannung an der Antennenspule 3 die kontaktlose Schnittstelle und ansonsten die kontaktbehaftete Schnittstelle aktiviert. Eine Kontrolleinheit 13 steuert abhängig von Betriebsfall entweder die kontaktlose oder die kontaktbehaftete Schnittstelle und regelt den Zugriff auf einen Datenspeicher 14 über einen unidirektionalen Adreßbus und einen bidirektionalen Datenbus.

Die Kontrolleinheit 13 besteht aus vier Bereichen; Bereich 13a enthält die Schaltungen, die erkennen, ob die Chipkarte überhaupt in Betrieb ist (dies wird von der Pegelerkennungsschaltung 11 ermittelt), und wenn ja, welche Schnittstelle aktiv ist. Bereich 13b enthält die Schaltungen, die die kontaktlose Schnittstelle ansteuern, und Bereich 13c die Schaltungen, die die kontaktbehaftete Schnittstelle ansteuern. Bereich 13d enthält schließlich die Schaltungen, die für beide Betriebsarten erforderlich sind (hier werden z.B. die Daten aus dem Datenspeicher 14 abgerufen). Um den Stromverbrauch gering zu halten (dies ist vor allem für den kontaktlosen Betrieb zur Erzielung einer großen Reichweite wichtig), wird je nach Betriebsart jeweils der Bereich 13b oder der Bereich 13c in einen stromsparenden Ruhezustand versetzt.

Die Kontrolleinheit 13 kann je nach Applikation sehr unterschiedlich realisiert werden:
- verschiedenste Protokolle und Baudraten für kontaktlose und/oder kontaktbehaftete Schnittstelle
- Kryptografie, Authentifikation, PIN
- Speicherzugriffsschutz mit getrennten Speicherzugriffsbereichen je nach Betrieb über kontaktlose oder kontaktbehaftete Schnittstelle
- Realisierung mittels Mikroprozessors oder Logikgatter
- Reduktion des Stromverbrauches durch Abschaltung nicht benötigter Schaltungsteile im kontaktlosen Betriebsfall
- Antikollisionsprozedur für den kontaktlosen Betrieb mehrerer Karten am Arbeitsabstand einer Schreib-Lese-Station usw.

Entsprechend der vorangegangenen Beschreibung laßt sich eine Chipkarte mit minimaler Anzahl von Einzelkomponenten und daher mit minimalem verarbeitungstechnischen Aufwand realisieren, die ohne Einschränkung in Funktionalität und Normkompatibilität sowohl über eine kontaktlose als auch über eine kontaktbehaftete Schnittstelle betrieben werden kann.

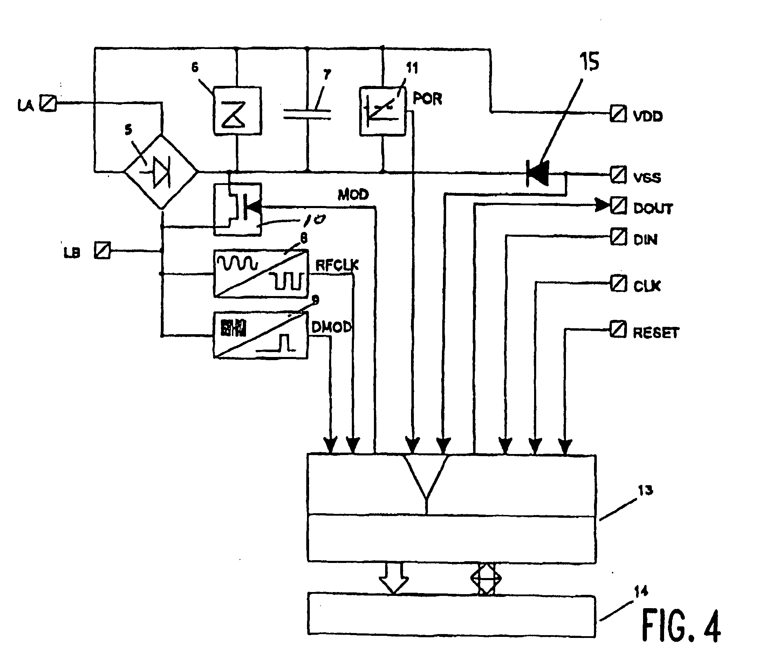

Fig. 4 unterscheidet sich von Fig. 3 dadurch, daß die Wechselspannungserkennnungsschaltung 12 fehlt. Statt dessen ist zwischen dem Anschluß VSS und dem Gleichrichter 5 eine Diode 15 vorgesehen, die den Anschluß VSS vom Gleichrichter 5 entkoppelt. Am Anschluß VSS liegt daher keine Spannung an, wenn die Betriebsspannung von der Antennenspule 3 geliefert wird, sondern nur dann, wenn die Betriebsspannung von dem mit dem Anschluß VSS verbundenen Kontakt geliefert wird. Der Anschluß VSS ist mit der Kontrolleinheit 13 direkt verbunden, sodaß diese mit einer Spannungserkennungsschaltung die Betriebsart erkennen kann.

## Patentansprüche

1. Chipkarte, die sowohl über eine mit Kontakten gebildete kontaktbehaftete Schnittstelle als auch über zumindest eine mit einer Antennenspule gebildete kontaktlose Schnittstelle mit einer zugehörigen Schreib-Lese-Station koppelbar ist, wobei die Schreib-Lese-Station über die Kopplung die Energie für den Betrieb der Chipkarte liefert und auch der Datenaustausch über diese Kopplung erfolgt, wobei für den Fall der Kopplung über die Antennenspule(n) ein Gleichrichter zur Energieversorgung vorgesehen ist und wobei eine Wechselspannungserkennungsschaltung zum Umschalten der Chipkarte zwischen den beiden Betriebsarten "Kopplung über die Kontakte" und "Kopplung über die Antennenspule(n)" vorgesehen ist,
**dadurch gekennzeichnet, daß** der Gleichrichter (5) direkt mit in wenigstens einem von der Chipkarte umfaßten Datenspeicher (14) und einer Kontrolleinheit (13) zum vom Betriebsfall abhängigen Steuern entweder der kontaktlosen oder der kontaktbehafteten Schnittstelle und zum Regeln eines Zugriffs auf den Datenspeicher (14) angeordneten Komponenten, die Betriebsspannung benötigen, verbunden ist.

2. Chipkarte, die sowohl über eine mit Kontakten gebildete kontaktbehaftete Schnittstelle als auch über zumindest eine mit einer Antennenspule gebildete kontaktlose Schnittstelle mit einer zugehörigen Schreib-Lese-Station koppelbar ist, wobei die Schreib-Lese-Station über die Kopplung die Energie für den Betrieb der Chipkarte liefert und auch der Datenaustausch über diese Kopplung erfolgt und wobei für den Fall der Kopplung über die Antennenspule(n) ein Gleichrichter zur Energieversorgung vorgesehen ist,
**dadurch gekennzeichnet, daß** der Gleichrichter (5) direkt mit in wenigstens einem von der Chipkarte umfaßten Datenspeicher (14) und einer Kontrolleinheit (13) zum vom Betriebsfall abhängigen Steuern entweder der kontaktlosen oder der kontaktbehafteten Schnittstelle und zum Regeln eines Zugriffs auf den Datenspeicher (14) angeordneten Komponenten, die Betriebsspannung benötigen, verbunden ist, wodurch am Gleichrichter (5) in den beiden Betriebsarten "Kopplung über die Kontakte" und "Kopplung über die Antennepspule(n)" die Betriebsspannung anliegt, daß der die Versorgungsspannung liefernde Kontakt (VSS) beispielsweise durch eine Diode (15) vom Gleichrichter (5) entkoppelt ist und daß an diesem Kontakt (VSS) eine Spannungserkennungsschaltung zum Umschalten der Chipkarte (4) zwischen den beiden Betriebsarten "Kopplung über die " Kontakte" und "Kopplung über die Antennenspule(n)" angeschlossen ist.

3. Chipkarte nach Anspruch 1 oder 2,
**dadurch gekennzeichnet, daß** genau eine Antennenspule (3) vorgesehen ist.

4. Chipkarte nach einem der Ansprüche 1 bis 3,
**dadurch gekennzeichnet, daß** Speicherzugriffirechte zum Zugriff auf den Datenspeicher (14) abhängig von den Betriebsarten "Kopplung über die Kontakte" und "Kopplung über die Antennenspule(n)" unterschiedlich konfigurierbar sind.

5. Chipkarte nach Anspruch 4,
**dadurch gekennzeichnet, daß** im Datenspeicher (14) zwei Speicherbereiche vorgesehen sind, die abhängig von den Betriebsarten "Kopplung über die Kontakte" und "Kopplung über die Antennenspule(n)" alternativ aktiviert sind.

6. Chipkarte nach einem der Ansprüche 1 bis 5,
**dadurch gekennzeichnet, daß** die Kontrolleinheit (13) Mittel umfaßt, durch die in der Betriebsart "Kopplung über die Antennenspule(n)" zur Erzielung einer maximalen Übertragungsreichweite die für diese Betriebsart nicht benötigten Schaltungsteile in einen stromsparenden Ruhezustand versetzt sind.

7. Chipkarte nach einem der Ansprüche 1 bis 6,
**dadurch gekennzeichnet, daß** der Chip (2) auf der Unterseite des Kontaktfeldes (1) montiert ist und daß der Chip (2) über zwei Anschlüsse (LA, LB) mit einer gewickelten, geätzten oder gedruckten Antennenspule (3), die in der Chipkarte (4) eingebettet ist, verbunden ist.

8. Chipkarte nach einem der Ansprüche 1 bis 6,
**dadurch gekennzeichnet, daß** die Antennenspule auf dem Chip mitintegriert ist.

9. Chipkarte nach Anspruch 8,
**dadurch gekennzeichnet, daß** der Chip mit integrierter Antenne unter dem Kontaktfeld montiert ist.

10. Chipkarte nach einem der Ansprüche 1 bis 6,
**dadurch gekennzeichnet, daß** der Chip auf der Unterseite des Kontaktfeldes montiert ist und daß der Chip über zwei Anschlüsse mit einer kleinen Antennenwicklung verbunden ist, die sich so wie der Chip ebenfalls unter dem Kontaktfeld innerhalb des Kontaktmodules befindet.

## Claims

1. A chip-card which can be coupled to an associated write-read station via a contact-bound interface having contacts as well as via at least one contactless interface formed by an antenna coil, the write-read station supplying the operating power for the chip-card via the coupling and the data exchange also taking place via this coupling, a rectifier being provided to supply power in the case of coupling via the antenna coil(s) and in which an AC recognition circuit is provided for switching the chip-card between the two modes of operation "coupling via the contacts" and "coupling via the antenna coil(s)", **characterized in that** the rectifier (5) is connected directly with at least one data memory (14) encapsulated in the chip-card and to a control unit (13) for controlling, depending on the mode, either the contactless or the contact-bound interface and for controlling an access to components arranged on the data memory (14), which components need to have operating power.

2. A chip-card which can be coupled to an associated write-read station via a contact-bound interface having contacts as well as via at least one contactless interface formed by an antenna coil, the write-read station supplying the operating power for the chip-card via the coupling and the data exchange also taking place via this coupling, and a rectifier being provided to supply power in the case of coupling via the antenna coil(s), **characterized in that** the rectifier (5) is connected directly with at least one data memory (14) encapsulated in the chip-card and to a control circuit (13) for controlling, depending on the mode, either the contactless or the contact-bound interface and for controlling an access to components arranged on the data memory (14), which components need to have operating power, so that the operating voltage is present at the rectifier (5) in the two modes of operation "coupling via the contacts" and "coupling via the antenna coil(s)", **in that** the contact (VSS) delivering the supply voltage is decoupled from the rectifier (5) for example by a diode and **in that** a voltage recognition circuit for switching the chip-card (4) between the two modes of operation "coupling via the contacts" and "coupling via the antenna coil(s)" is connected to this contact (VSS)

3. A chip-card as claimed in Claim 1 or 2, **characterized in that** not more than one antenna coil (3) is provided.

4. A chip-card as claimed in any one of the Claims 1 to 3, **characterized in that** the memory access authorizations can be configured differently in dependence on the modes of operation "coupling via the contacts" and "coupling via the antenna coil(s)".

5. A chip-card as claimed in Claim 4, **characterized in that** there are provided two memory sections which can be alternatively activated in dependence on the modes of operation "coupling via the contacts" and "coupling via the antenna coil(s)".

6. A chip-card as claimed in any one of the Claims 1 to 5, **characterized in that** the control unit (13) comprises means by which, in the mode "coupling via the antenna coil(s)" the circuit components which are not required in this mode are controlled to a power-saving rest state in order to achieve a maximum transmission range.

7. A chip-card as claimed in any one of the Claims 1 to 6, **characterized in that** the chip (2) is mounted on the underside of the contact bank (1) and is connected, via two terminals (LA, LB), to a wound, etched or printed antenna coil (3) embedded in the chip-card (4).

8. A chip-card as claimed in any one of the Claims 1 to 6, **characterized in that** the antenna coil is integrated on the chip.

9. A chip-card as claimed in Claim 8, **characterized in that** the chip with the integrated antenna is mounted underneath the contact bank.

10. A chip-card as claimed in any one of the Claims 1 to 6, **characterized in that** the chip is mounted on the underside of the contact bank and that the chip is connected, via two terminals, to a small antenna winding which, like the chip, is situated underneath the contact bank in the contact module.

## Revendications

1. Carte à puce qui peut être couplée à la fois par l'intermédiaire d'une interface par contact formée par des contacts mais aussi par l'intermédiaire d'au moins une interface sans contact formée par une bobine d'antenne avec un terminal de lecture-écriture correspondant, le terminal de lecture-écriture délivrant par l'intermédiaire du couplage l'énergie pour le fonctionnement de la carte à puce et l'échange de données étant assuré aussi par l'intermédiaire de ce couplage, un redresseur étant prévu pour l'alimentation de l'énergie en cas de couplage par l'intermédiaire de la ou des bobines d'antenne et un circuit de reconnaissance de la tension alternative étant prévu pour la commutation de la carte à puce entre les deux modes de fonctionnement "couplage par l'intermédiaire des contacts" et "couplage par l'intermédiaire de la ou des bobines d'antenne", que le redresseur (5) est relié directement avec au moins une mémoire de données (14) renfermée par la carte à puce et une unité de contrôle (13) pour la commande en fonction du cas de fonctionnement soit de l'interface par contact, soit de l'interface sans contact et pour réglage d'un accès aux composants disposés sur la mémoire de données (14) qui ont besoin d'une tension de fonctionnement.

2. Carte à puce qui peut être couplée à la fois par l'intermédiaire d'une interface par contact formée par des contacts mais aussi par l'intermédiaire d'au moins une interface sans contact formée par une bobine d'antenne avec un terminal de lecture-écriture correspondant, le terminal de lecture-écriture délivrant par l'intermédiaire du couplage l'énergie pour le fonctionnement de la carte à puce et l'échange de données étant assuré aussi par l'intermédiaire de ce couplage, un redresseur étant prévu pour l'alimentation en énergie en cas de couplage par l'intermédiaire de la ou des bobines d'antenne, **caractérisée en ce que** le redresseur (5) est relié directement avec une mémoire de données (14) renfermée par la carte à puce et une unité de contrôle (13) pour la commande, en fonction du cas de fonctionnement, soit de l'interface sans contact, soit de l'interface par contact et pour le réglage d'un accès aux composants disposés sur la mémoire de données (14) qui ont besoin d'une tension de fonctionnement, la tension de fonctionnement étant appliquée sur le redresseur (5) dans les deux modes de fonctionnement "couplage par l'intermédiaire des contacts" et "couplage par l'intermédiaire de la ou des bobines d'antenne" de telle sorte que le contact (VSS) délivrant la tension d'alimentation soit par exemple découplé par une diode (15) du redresseur (5) et qu'un circuit de reconnaissance de tension pour la commutation de la carte à puce (4) entre les deux modes de fonctionnement "couplage par l'intermédiaire des contacts" et "couplage par l'intermédiaire de la ou des bobines d'antenne" soit raccordé à ce contact (VSS).

3. Carte à puce selon l'une des revendications 1 ou 2, caractérisée en ce qu'une bobine d'antenne (3) est précisément prévue.

4. Carte à puce selon l'une des revendications 1 à 3, **caractérisée en ce que** les droits d'accès à la mémoire peuvent être configurés différemment pour l'accès à la mémoire de données (14) en fonction des modes de fonctionnement "couplage par l'intermédiaire des contacts" et "couplage par l'intermédiaire de la ou des bobines d'antenne".

5. Carte à puce selon la revendication 4, **caractérisée en ce que** deux zones de mémoire sont prévues dans la mémoire de données (14) et sont activées en alternance en fonction des modes de fonctionnement "couplage par l'intermédiaire des contacts" et "couplage par l'intermédiaire de la ou des bobines d'antenne".

6. Carte à puce selon une des revendications 1 à 5, **caractérisée en ce que** l'unité de contrôle (13) comprend des moyens par l'intermédiaire desquels les pièces de circuit non nécessaires pour ce mode de fonctionnement sont amenées dans un état de repos à économie d'énergie dans le mode de fonctionnement "couplage par l'intermédiaire des contacts" et "couplage par l'intermédiaire de la ou des bobines d'antenne" en vue d'atteindre une portée de transmission maximale.

7. Carte à puce selon l'une des revendications 1 à 6, **caractérisée en ce que** la puce (2) est montée sur la face inférieure de la zone de contact (1) et que la puce (2) est reliée par l'intermédiaire de deux bornes (LA, LB) à une bobine d'antenne (3) enroulée, gravée ou imprimée qui est intégrée dans la carte à puce (4).

8. Carte à puce selon l'une des revendications 1 à 6, **caractérisée en ce que** la bobine d'antenne est intégrée sur la puce.

9. Carte à puce selon la revendication 8, **caractérisé en ce que** la puce est montée avec une antenne intégrée sous la zone de contact.

10. Carte à puce selon l'une des revendications 1 à 6, **caractérisé en ce que** la puce est montée sur la face inférieure de la zone de contact et que la puce est reliée par l'intermédiaire de deux bornes à un petit enroulement d'antenne qui se trouve, tout comme la puce, sous la zone de contact à l'intérieur des modules de contact.
